# EUROPÄISCHE PATENTANMELDUNG

(11) **EP 4 568 223 A1**
(43) Veröffentlichungstag der Anmeldung: **11.06.2025**
(21) Anmeldenummer: 23214716.5
(22) Anmeldetag: 06.12.2023
(51) Int. Cl.: H04L 47/2416, H04W 28/02

(54) **VERFAHREN ZUM BETREIBEN EINES NETZWERKS FÜR EINE UMGEBUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Walewski, Joachim, 82008 Unterhaching (DE); Scheffel, Matthias, 82008 Unterhaching (DE)
(74) Vertreter: Siemens Patent Attorneys

(57) **Zusammenfassung**

Die Erfindung betrifft ein Verfahren zum Betreiben eines Netzwerks (10) für eine Umgebung mittels einer elektronischen Recheneinrichtung (12), mit den Schritten: Bereitstellen einer Kommunikationsverbindung (22) zwischen einem Endgerät (18) im Netzwerk (10) und einem Funkzugangsnetz (20) des Netzwerks (10) mittels der elektronischen Recheneinrichtung (12); Bereitstellen einer zeitsensitiven Netzwerkverbindung (26) zwischen dem Funkzugangsnetz (20) und einer User-Plane Funktion (24) des Netzwerks (10) mittels der elektronischen Recheneinrichtung (12); und Übertragen eines Datenpaktes zwischen dem Endgerät (18) und einem externen Netzwerk (28) über die zeitsensitive Netzwerkverbindung (26) und die Kommunikationsverbindung (22) mittels der elektronischen Recheneinrichtung (12). Ferner betrifft die Erfindung ein Computerprogrammprodukt, ein computerlesbares Speichermedium sowie eine elektronische Recheneinrichtung (12).

## Beschreibung

Die nachfolgende Erfindung betrifft ein Verfahren zum Betreiben eines Netzwerks für eine Umgebung, mittels einer elektronischen Recheneinrichtung gemäß den geltenden Patentanspruch 1. Ferner betrifft die Erfindung ein entsprechendes Computerprogrammprodukt, ein entsprechendes computerlesbares Speichermedium sowie eine entsprechende elektronische Recheneinrichtung.

Im Stand der Technik sind sogenannte 5G-Systeme bereits bekannt. Insbesondere kann somit ein 5G-Netzwerk bereitgestellt werden, welches dem 5G-Standard gemäß der 5G-Architektur in ETSI TS 123 501 entspricht.

Insbesondere innerhalb des 5G-Netzwerks ist die Nutzerdatenebene ausgebildet aus dem Endgerät, einem Funkzugangsnetz, einem Transportnetz, und einer sogenannten User-Plane Funktion (UPF). Dabei weist ein entsprechender Protokollstapel innerhalb eines solchen 5G-Netzwerks beispielsweise einen GTP-U-Layer, einen UDP-Layer, einen IP-Layer und einen PDU-Layer auf. Diese Schichten können sich erheblich auf die Bit-Rate auswirken, die für die Übertragung eines kurzen Pakets/Frames z.B. vom Datennetz beziehungsweise externen Netzwerk zum Endgerät benötigt wird. Beispielsweise müssen Anwendungsnachrichten von 50-Byte-Längen vom externen Netzwerk zum Endgerät mit einer Frequenz von 1 kHz gesendet werden. Die resultierende Dienstbitrate ist dann 50 Byte mal 8 Bit/Byte x 1 kHz und somit 400 kbit/s. Die Länge des Ethernet-Frames, der diese Nachricht transportiert, beträgt 74 Byte. Die Schicht-2-Bitrate für dieses Beispiel ist also 74/50 x 400 kbit = 592 kbit/s. Das Paket der Transportschicht ist jedoch viel länger, und die auf der Schicht 2 des 5G-Transportnetzes erforderliche Bitrate beträgt (74 + 52 + 24) / 50 x 400 kbit/s und somit 1,2 Mbit/s. Bei dieser Berechnung wird davon ausgegangen, dass es sich bei der zweiten Schicht des Transportnetzes um Ethernet handelt und dass der entsprechende Mehraufwand 24 Byte beträgt. Die Bitrate des 5G-Transportnetzes muss also mehr als doppelt so hoch sein wie die des angeschlossenen Datennetzes beziehungsweise externen Netzes.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen mit einer reduzierten Datenrate eine Kommunikation eines Endgeräts mit einem externen Netzwerk innerhalb eines lokalen Netzwerks durchgeführt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Netzwerks für eine Umgebung mittels einer elektronischen Recheneinrichtung.

Es wird eine Kommunikationsverbindung zwischen einem Endgerät und einem Funkzugangsnetz des Netzwerks mittels der elektronischen Recheneinrichtung bereitgestellt. Es wird eine zeitsensitive Netzwerkverbindung zwischen dem Funkzugangsnetz und einer User-Plane Funktion des Netzwerks mittels der elektronischen Recheneinrichtung bereitgestellt. Es wird ein Datenpaket zwischen dem Endgerät und einem externen Netzwerk über die zeitsensitive Netzwerkverbindung und die Kommunikationsverbindung mittels der elektronischen Recheneinrichtung übertragen.

Insbesondere schlägt somit die Erfindung vor, dass eine zweite Schicht und eine erste Schicht des 5G-Transportnetzwerks als zeitintensives Netzwerk (TSN - Time sensitive Network) bereitgestellt werden. Insbesondere in eigenständigen nicht-öffentlichen Netzwerken kann das Transportnetz recht klein sein, und es besteht keine Notwendigkeit, die Nutzlast der PDU-Schicht über mehrere IP-Subnetze zu leiten. Eine reine geschaltete-LAN-Lösung ist daher ausreichend, wie vorgeschlagen.

Die Erfindung schlägt somit vor, den Protokollstapel beziehungsweise den Protokollstapel GTP-U/UDP/IP/L2/L1 des 5G-Transportnetzwerks durch eine zeitsensitive Netzwerkverbindung zu ersetzen.

Dies stellt eine deutliche Vereinfachung gegenüber dem Stand der Technik dar. In diesem Fall entspricht beispielsweise die Bit-Rate der Schicht 2 im Transportnetz derjenigen im Datennetz. Somit kann mit einer reduzierten Datenrate eine Kommunikation zwischen dem Endgerät und dem externen Netzwerk, beispielsweise im Intranet, realisiert werden.

Insbesondere reduziert somit die Erfindung den Bitraten-Mehraufwand im 5G-Transportnetz, insbesondere bei kleinen Paket- oder Rahmennutzlasten. Diese Erfindung vereinfacht somit die Unterstützung von TSN und deterministischen Netzen über 5G-Standard. Als weiterer Nebeneffekt erleichtert diese Erfindung die Anpassung des 5G-Systems an Änderungen der einschlägigen IEEE- und IETF-Standards. Anstatt 3GPP-Funktionen zu entwerfen/anzupassen, die IEEE/IETF-Funktionen emulieren, können die einschlägigen 3GPP-Spezifikationen einfach auf diese IEEE/IETF-Funktionen verweisen. Dies reduziert nicht nur den Standardisierungsaufwand, sondern beschleunigt auch die Unterstützung neuer IEEE/IETF-Funktionen in 5G-Systemen. Gleichzeitig bleibt durch diese Erfindung das erhalten, was 3GPP-Systeme auszeichnet und wertvoll macht, nämlich die Layer-2- und Layer-1-RAN-Technologie, Kontroll-Funktionen wie die RAN-Verschlüsselungsunterstützung, Mobilfunkunterstützung und dergleichen.

Ein weiterer positiver Effekt ist, dass die Funktionen der 3GPP-Nutzerdatenebene aus einem viel breiteren Spektrum von Angeboten ausgewählt werden können, was den Preis dieser Funktionen senkt und die Lösung des Problems des zweiten Anbieters erleichtert.

Gemäß einer Ausgestaltungsform ist das Netzwerk als lokales Netzwerk bereitgestellt. Insbesondere ist das lokale Netzwerk ein kleines Netzwerk. Beispielsweise kann das lokale Netzwerk als Campusnetzwerk bereitgestellt werden. Somit kann insbesondere bei lokalen Netzwerken, in welchen die Datenrate entsprechend gering ist, über die zeitsensitive Netzwerkverbindung eine zuverlässige Reduzierung der Datenrate ermöglicht werden.

Ebenfalls vorteilhaft ist, wenn das lokale Netzwerk als 5G-Netzwerk ausgebildet ist. Bei dem 5G-Netzwerk handelt es sich insbesondere um einen Mobilfunkstandard. Das 5G-Netzwerk hat beispielsweise Datenraten bis zu 20 GB/s und eine Nutzung höherer Frequenzbereiche. Somit kann insbesondere im 5G-Netz eine zuverlässige Datenübertragung realisiert werden.

Weiter vorteilhaft ist, wenn die Kommunikationsverbindung mittels eines RAN-Protokolls durchgeführt wird. Insbesondere wird somit die Kommunikation zwischen dem Endgerät und dem Funkzugangsnetz, welches auch als Radio-Access-Netzwerk (RAN) bezeichnet werden kann, realisiert. Insbesondere besteht das Funkzugangsnetz als Teil des Mobilfunknetzes aus beispielsweise einer Basisstation, darauf laufender Software und einer Antenne für die Funkverbindung zu dem mobilen Endgerät. Insbesondere kann somit beispielsweise eine Funkverbindung zwischen dem Endgerät und dem externen Netzwerk bereitgestellt werden.

Es hat sich weiterhin vorteilhaft erwiesen, wenn zwischen dem externen Netzwerk und der User-Plane Funktion eine weitere zeitsensitive Netzwerkverbindung aufgebaut wird. Somit kann auch zwischen der User-Plane Funktion und dem externen Netzwerk eine zeitsensitive Netzwerkverbindung bereitgestellt werden, welche eine einfache Datenübertragung vom externen Netzwerk zum Endgerät erlaubt.

In einer weiteren vorteilhaften Ausgestaltungsform ist vorgesehen, dass ein Protokollstapel für die zeitsensitive Netzwerkverbindung dreischichtig bereitgestellt wird. Insbesondere kann somit der Protokollstapel mit weniger Schichten bereitgestellt werden als im Stand der Technik.

Dabei kann insbesondere vorgesehen sein, dass als eine erste Schicht eine Ethernetschicht, als eine zweite Schicht eine zeitsensitive Schicht und als eine dritte Schicht eine Endgeräteschicht bereitgestellt wird. Dies ist insbesondere gegenüber dem Stand der Technik eine deutliche Vereinfachung. Insbesondere entspricht in dem Fall die Bitrate der Schicht 2 im Transportnetz derjenigen im Datennetz.

Eine weitere vorteilhafte Ausgestaltungsform sieht vor, dass die zeitsensitive Netzwerkverbindung mittels einer Session-Management Funktion der elektronischen Recheneinrichtung gesteuert wird. Bei dieser Lösung kann die Session-Management Funktion oder eine Anwendungsfunktion insbesondere als Controller für das zeitsensitive Netzwerk fungieren. Bei dieser Lösung interagieren die zeitsensitiven Netzwerkcontroller wie eine zentrale Steuerungseinheit mit entsprechenden TSN-Switches innerhalb des 5G-Netzwerks z.B. dem UPFTSN-Switch. Das Endgerät und das Funkzugangsnetz werden zusammen als TSN-Brücke moduliert. In diesem Fall verwaltet die Session-Management-Funktion zumindest das Endgerät mit dem Funkzugangsnetz als TSN-Brücke. Die TSN-Frames werden dabei in der Brücke entsprechend getunnelt.

Es hat sich weiterhin als vorteilhaft erwiesen, wenn bei der zeitsensitiven Netzwerkverbindung ein Transport-Schichten-Header hinzugefügt wird. Insbesondere wird somit ein Transport-Schichten-Header zwischen dem TSN-Header und der Dienstdateneinheit hinzugefügt. Dies geschieht im Endgerät und in der User-Plane Funktion, und dieser "Zwischen-Header" wird entfernt, bevor das 5G-Netzwerk auf der anderen Seite verlassen wird. Mit Hilfe dieses Headers kann das Netzwerk-Slicing im 5G-System aktiviert werden.

Ferner hat es sich als vorteilhaft erwiesen, wenn zwischen dem externen Netzwerk und der User-Plane Funktion eine Ethernetverbindung bereitgestellt wird. Insbesondere kann Standardethernet mit der User-Plane Funktion und/oder über die Modem-User-Plane Interface mit dem Endgerät verbunden werden. In diesem Fall werden insbesondere sogenannte VLAN-Header am Endgerät und User-Plane Funktion-Eingänge entfernt, und für das Transportnetz erforderliche TSN-Header-Felder werden von der Session-Management-Funktion definiert und an die User-Plane Funktion und die Schnittstelle zwischen RAN und dem Transportnetz weitergeleitet.

In einer weiteren vorteilhaften Ausgestaltungsform ist vorgesehen, dass Regeln für die Nutzungsberichterstattung bei der User-Plane Funktion über eine separate Netzwerkfunktion implementiert werden. Dadurch kann eine verbesserte Implementierung der TSN-Funktionalitäten in der User-Plane-Funktion realisiert werden.

Ferner hat sich als vorteilhaft erwiesen, wenn eine drahtgebundene Kommunikationsverbindung zwischen dem Endgerät und dem Funkzugangsnetz bereitgestellt wird. Somit kann auch eine drahtgebundene Verbindung zwischen dem Endgerät und dem Funkzugangsnetz bereitgestellt werden und dennoch zuverlässig eine Übermittlung des Datenpakets zwischen dem externen Netzwerk und dem Endgerät realisiert werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft ein computerlesbares Speichermedium mit zumindest dem Computerprogrammprodukt nach dem vorhergehenden Aspekt.

Ferner betrifft die Erfindung auch eine elektronische Recheneinrichtung zum Betreiben eines Netzwerks für eine Umgebung, wobei die elektronische Recheneinrichtung zum Durchführen eines Verfahrens nach dem vorhergehenden Aspekt ausgebildet ist. Insbesondere wird das Verfahren mittels des Netzwerks durchgeführt.

Ferner betrifft die Erfindung auch ein Netzwerk mit zumindest einer elektronischen Recheneinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie des Netzwerks anzusehen. Die elektronische Recheneinrichtung sowie das Netzwerk weisen hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: eine schematisches Blockschaltbild gemäß einer Ausführungsform eines Netzwerks mit einer Ausführungsform einer elektronischen Recheneinrichtung;
- FIG 2: ein schematisches Blockschaltbild gemäß einer Ausführungsform eines Netzwerks;
- FIG 3: ein schematisches Blockschaltbild gemäß einer Ausführungsform eines Protokollstapels;
- FIG 4: ein weiteres schematisches Blockschaltbild gemäß einer Ausführungsform eines Protokollstapels; und
- FIG 5: ein schematisches Blockschaltbild gemäß einer weiteren Ausführungsform eines Netzwerks.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

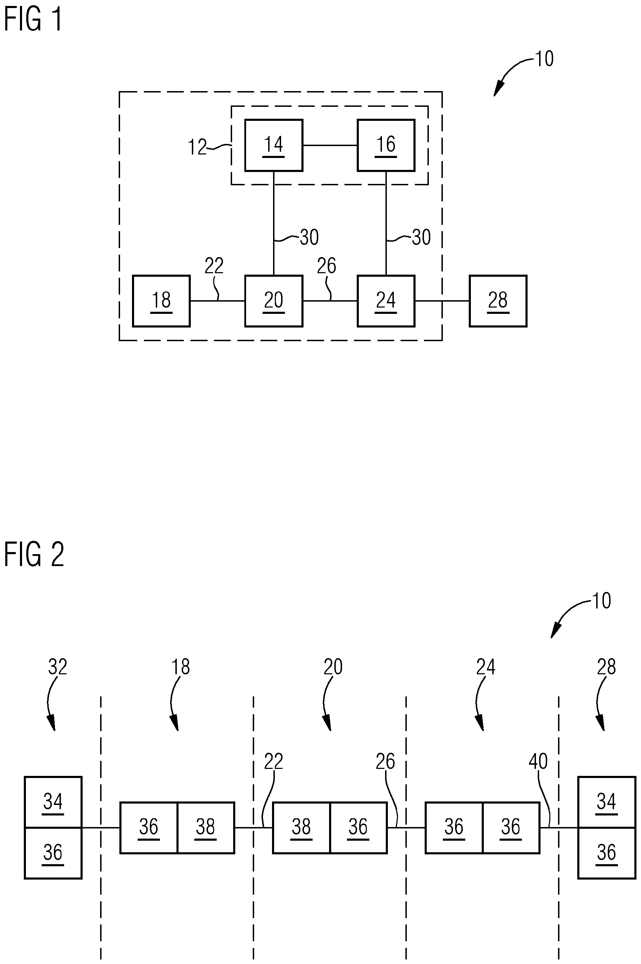

In FIG 1 zeigt ein schematisches Blockschaltbild gemäß einer Ausführungsform eines Netzwerks 10. Das Netzwerk 10 weist zumindest eine elektronische Recheneinrichtung 12 zum Betreiben des Netzwerks 10 auf. Die elektronische Recheneinrichtung 12 weist im vorhergehenden Ausführungsbeispiel ein Funktionszugangs- und Mobilitätsmanagement 14 sowie eine Session-Management Funktion 16 auf. Ferner ist ein Endgerät 18 innerhalb des Netzwerks 10 gezeigt. Zwischen dem Endgerät 18 und einem Funkzugangsnetz 20 ist eine Kommunikationsverbindung 22 gezeigt. Ferner ist zwischen dem Funkzugangsnetz 20 und einer User-Plane Funktion 24 eine zeitsensitive Netzwerkverbindung 26 gezeigt. Des Weiteren zeigt die FIG 1, dass die User-Plane Funktion 24 mit einem externen Netzwerk 28 in Verbindung steht. Ferner sind Steuerungsverbindungen 30 gezeigt.

Insbesondere zeigt die FIG 1, dass die Kommunikationsverbindung 22 zwischen dem Endgerät 18 und dem Funkzugangsnetz 20 bereitgestellt wird. Es wird die zeitsensitive Netzwerkverbindung 26 zwischen dem Funkzugangsnetz 20 und der User-Plane Funktion 24 bereitgestellt. Es erfolgt das Übertragen eines Datenpakets zwischen dem Endgerät 18 und dem externen Netzwerk 28 über die zeitsensitive Netzwerkverbindung 26 und die Kommunikationsverbindung 22 mittels der elektronischen Recheneinrichtung 12.

Insbesondere kann dabei vorgesehen sein, dass das Netzwerk 10 als lokales Netzwerk 10 bereitgestellt wird. Ferner kann das lokale Netzwerk 10 als 5G-Netzwerk ausgebildet sein.

FIG 2 zeigt ein schematisches Blockschaltbild gemäß einer Ausführungsform des Netzwerks 10. FIG 2 zeigt insbesondere, dass das Endgerät 18 noch mit einer Endstation 32 gekoppelt sein kann. Die Endstation 32 kann insbesondere eine Applikationsschicht 34 sowie einen TSN-Block 36 zur TSN-Kommunikation aufweisen. Über beispielsweise ein Modem kann die Endstation 32 mit dem Endgerät 18 verbunden sein. Das Endgerät 18 weist wiederum ebenfalls einen TSN-Block 36 auf. Ferner ist gezeigt, dass die Kommunikationsverbindung 22 zwischen dem Endgerät 18 und dem Funkzugangsnetz 20 über beispielsweise ein RAN-Protokoll 38 durchgeführt werden kann. Das Funkzugangsnetz 20 kann wiederum ferner ebenfalls einen TSN-Block 36 aufweisen, wobei die zeitsensitive Netzwerkverbindung 26 dann wiederum mit der User-Plane Funktion 24 kommuniziert, wobei die User-Plane Funktion 24 wiederum hierzu ebenfalls einen TSN-Block 36 aufweisen kann. Ferner zeigt die FIG 2, dass auch zwischen dem externen Netzwerk 28 und dem U-ser-Plane Funktion 24 eine weitere zeitsensitive Netzwerkverbindung 40 vorgesehen sein kann. Hierzu kann die User-Plane Funktion 24 einen weiteren TSN-Block 36 aufweisen. Ferner weist auch das externe Netzwerk 28 einen TSN-Block 36 auf. Das externe Netzwerk 28 weist ferner im vorliegenden Ausführungsbeispiel eine Applikationsschicht 34 auf.

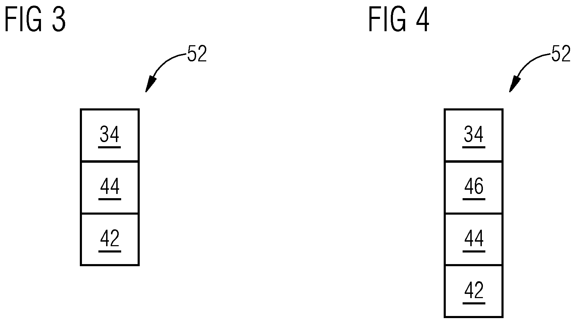

Insbesondere löst somit die FIG 2 das Problem, dass die Schichten des GTP-U/UDP/IP im Stand der Technik beibehalten werden, jedoch gemäß FIG 2 insbesondere über das zeitsensitive Netzwerk 26, insbesondere das Transportnetz, direkt gesendet wird. Insbesondere in eigenständigen nicht öffentlichen Netzwerken 10 kann das Transportnetz recht klein sein, und es besteht keine Notwendigkeit, die Nutzlast der GTP-U-Schicht über mehrere IP-Subnetze zu leiten. Eine reine geschaltete-LAN-Lösung ist daher ausreichend, wie in der FIG 2 gezeigt. Die Kernidee, die in der FIG 2 gezeigt ist, ist daher dem Protokolls tack GTP-U/UDP/IP/L2/L1 des 5G-Transportnetzes durch TSN-Ethernet zu ersetzen. Ein entsprechender Protokollstapel 52 (FIG. 3) wird wiederum über die FIG 2 verwirklicht.

Die FIG 3 zeigt wiederum den entsprechenden Protokollstapel 52 zu FIG 2. Hierbei ist insbesondere die Applikationsschicht 34, eine erste Schicht 42, welche insbesondere einer Ethernet Schicht entspricht, sowie eine zweite Schicht 44, welche wiederum einer TSN-Schicht entspricht, dargestellt.

Insbesondere stellt dies eine deutliche Vereinfachung gegenüber dem Stand der Technik dar. In diesem Fall entspricht beispielsweise die Bitrate der zweiten Schicht 44 im Transportnetz derjenigen im Datennetz, insbesondere im externen Netzwerk 28. Bei dieser Lösung kann die Session-Management Funktion 16 oder eine Anwendungsfunktion als TSN-Controller fungieren. Bei dieser Lösung interagieren die TSN-NetzwerkController wie ein zentraler Netzwerkcontroller mit TSN-Switches innerhalb des 5G-Netzes, z.B. dem User-Plane Funktion TSN-Switch. Das Endgerät 18 und das Funkzugangsnetz 20 werden zusammen als TSN-Brücke modelliert. In diesem Fall verwaltet die Session-Management Funktion 16 zumindest das Endgerät 18 sowie das Funkzugangsnetz 20 als TSN-Brücke.

FIG 4 zeigt ein weiteres schematisches Blockschaltbild gemäß einer Ausführungsform eines Protokollstapel 52. Im folgenden Ausführungsbeispiel ist insbesondere gezeigt, dass eine weitere zweite Schicht 46, welche insbesondere ebenfalls einer TSN-Schicht entspricht, zwischen der zweiten Schicht 44 und der Applikationsschicht 34 vorgesehen sein kann. Insbesondere wird somit in der FIG 4 dargestellt, dass das gesamte 5G-Netzwerk als eine TSN-Brücke moduliert wird. Diese Variante hat den Vorteil, dass das "Innenleben" des 5G-Netzwerks einschließlich seiner Topologie nicht preisgegeben wird. In diesem Fall handelt es sich bei den Dienstdateneinheiten des Transportnetzes insbesondere um Ethernet-Frames.

Das VLAN des Transportnetzes kann in diesem Fall zur Realisierung von Netzscheiben, insbesondere sogenannten Slices im 5G-System, verwendet werden. In einer Variante davon wird das gesetzkonforme Abhören ermöglicht, indem der gesetzeskonforme Lauscher beziehungsweise Abhörer auf einer Endstation implementiert wird und seine Ethernet-Adresse zu den interessierenden Kommunikationsströmen hinzugefügt wird. Da TSN standardmäßig Multicast-Adressen verwendet, kann diese Hinzufügung spontan und ohne Unterbrechung der aktiven TSN-Ströme erfolgen.

In einer Variante davon kann beispielsweise ein Transport-Schichten-Header zwischen dem TSN-Header und der Dienstdateneinheit hinzugefügt werden. Dies geschieht insbesondere im Endgerät 18 und in der User-Plane Funktion 24, und der "Intra-Header" wird entfernt, bevor er das 5G-System auf der anderen Seite verlässt. Mit Hilfe dieses Headers kann das Netzwerk-Slicing im 5G-System aktiviert werden.

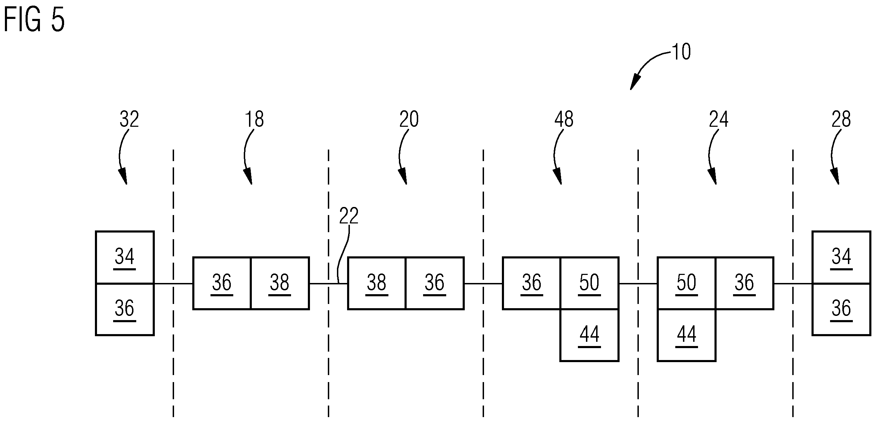

FIG 5 zeigt eine weitere Ausgestaltungsform eines Netzwerks 10. In der FIG 4 ist insbesondere zwischen dem Funkzugangsnetz 20 und der User-Plane Funktion 24 eine zwischengeschaltete User-Plane Funktion 48 gezeigt. Die zwischengeschaltete User-Plane Funktion 48 kann ebenfalls einen TSN-Block 36 aufweisen. Ferner kann ein entkapselter TSN-Frame 50 zwischen der zwischengeschalteten User-Plane Funktion 48 und der User-Plane Funktion 24 geschaltet werden. Hierbei können insbesondere zweite Schichten 44 vorgesehen sein.

Insbesondere kann vorliegend beispielsweise der Transport zwischen dem Funkzugangsnetz 20 und der User-Plane Funktion 24 über ein IP-Netz als zwischengeschaltete User-Plane Funktion 48 realisiert werden.

Zu diesem Zweck werden beispielsweise TSN-Pakete durch das IP-Netz getunnelt. Es ist dabei zu beachten, dass ein Breakout zu einem lokalen TSN-Datennetz von der zwischengeschalteten User-Plane Funktion 48 vom Selective-Traffic-Routing eingerichtet werden kann. In einer Variante davon kann der Transport über das IP-Netz durch ein deterministisches Netz (Det Net) durchgeführt werden. In einer weiteren Variante kann die IP-Kommunikation zwischen den beiden Endstationen, insbesondere der Endstation 32 und dem externen Netzwerk 28 durch ein deterministisches Netzwerk auf dem TSN-Netzwerk durchgeführt werden. Insbesondere basiert eine weitere Variante der Erfindung darauf, dass die logische Verbindungssteuerungsschicht der RAN-Protokollschichten auf TSN basiert. In diesem Fall besteht keine Notwendigkeit für das 5G-Service-Data-Adaption-Protocol. In einer weiteren Variante der Erfindung basiert die Kommunikation zwischen gNB-Zentraleinheiten (gNB-CUs) und zwischen verteilten und zentralen gNB-Einheiten auf TSN.

Im Falle von F1-C und E1 bedeutet dies, dass SCTP, IP, Data Link Layer und Physical Layer durch TSN ersetzt werden. Im Fall von F1-U bedeutet dies, dass GCP-U, UDP, IP, Data Link Layer und Physical Layer durch TSN ersetzt werden.

In einer weiteren Variante kann Standard-Ethernet beispielsweise zwischen der User-Plane Funktion 24 und dem externen Netzwerk 28 und/oder dem Modem User Plane Interface mit dem Endgerät 18 verbunden werden. In diesem Fall werden die VLAN-Header am Endgerät 18 und am User-Plane Funktion-Eingang entfernt, und für das Transportnetz erforderliche TSN-Header-Felder werden von der Session-Management Funktion 16 definiert und an die User-Plane Funktion 24 und die Schnittstelle zwischen dem Funkzugangsnetz 20 und dem Transportnetz weitergeleitet.

In einer weiteren Variante werden die Regeln für die Nutzungsberichterstattung in der User-Plane Funktion 24 in einer separaten Netzfunktion implementiert, die eine Schnittstelle S zur "verkürzten" User-Plane Funktion 24 bildet.

In einer weiteren Variante ist das Zugangsnetz zwischen dem Endgerät 18 und dem Transportnetz verkabelt.

In einer weiteren Variante kann das TSN im Transportnetz (und gegebenenfalls die RAN-Logic-Link-Control-Schicht) durch eine andere deterministische Schicht-2-Technologie ersetzt, z.B. die Standard-Ethernet Link-Control, werden.

Ferner kann in einer Variante die Schicht-2-Konnektivität im gesamten 5G-System mit einem Carrier-Ethernet-Ansatz wie Provider Bridging oder Provider Backbone Bridging anstelle von TSN realisiert werden. In einer weiteren Variante kann der TSN-Controller außerhalb des 5G-Systems platziert werden.

## Patentansprüche

1. Verfahren zum Betreiben eines Netzwerks (10) für eine Umgebung mittels einer elektronischen Recheneinrichtung (12), mit den Schritten:
- Bereitstellen einer Kommunikationsverbindung (22) zwischen einem Endgerät (18) im Netzwerk (10) und einem Funkzugangsnetz (20) des Netzwerks (10) mittels der elektronischen Recheneinrichtung (12);
- Bereitstellen einer zeitsensitiven Netzwerkverbindung (26) zwischen dem Funkzugangsnetz (20) und einer User-Plane Funktion (24) des Netzwerks (10) mittels der elektronischen Recheneinrichtung (12); und
- Übertragen eines Datenpaktes zwischen dem Endgerät (18) und einem externen Netzwerk (28) über die zeitsensitive Netzwerkverbindung (26) und die Kommunikationsverbindung (22) mittels der elektronischen Recheneinrichtung (12).

2. Verfahren nach Anspruch 1, **dadurch gekennzeichnet, dass** das Netzwerk (10) als lokales Netzwerk bereitgestellt wird.

3. Verfahren nach Anspruch 1 oder 2, **dadurch gekennzeichnet, dass**
das Netzwerk (10) als 5G-Netzwerk ausgebildet ist.

4. Verfahren nach einem der vorhergehenden Ansprüche, **dadurch gekennzeichnet, dass**
die Kommunikationsverbindung (22) mittels eines RAN-Protokolls (38) durchgeführt wird.

5. Verfahren nach einem der vorhergehenden Ansprüche, **dadurch gekennzeichnet, dass**
zwischen dem externen Netzwerk (28) und der User-Plane Funktion (24) eine weitere zeitsensitive Netzwerkverbindung (40) aufgebaut wird.

6. Verfahren nach einem der vorhergehenden Ansprüche, **dadurch gekennzeichnet, dass**
ein Protokollstapel (52) für die zeitsensitive Netzwerkverbindung (26) dreischichtig bereitgestellt wird.

7. Verfahren nach Anspruch 6, **dadurch gekennzeichnet, dass** als eine erste Schicht (42) eine Ethernet Schicht, als eine zweite Schicht (44) eine zeitsensitive Schicht und als eine dritte Schicht eine Endgeräteschicht (34) bereitgestellt wird.

8. Verfahren nach einem der vorhergehenden Ansprüche, **dadurch gekennzeichnet, dass**
die zeitsensitive Netzwerkverbindung (26) mittels einer Session-Management Funktion (16) der elektronischen Recheneinrichtung (12) gesteuert wird.

9. Verfahren nach einem der vorhergehenden Ansprüche, **dadurch gekennzeichnet, dass**
bei der zeitsensitiven Netzwerkverbindung (26) ein Transport-Schichten-Header hinzugefügt wird.

10. Verfahren nach einem der vorhergehenden Ansprüche, **dadurch gekennzeichnet, dass**
zwischen dem externen Netzwerk (28) und der User-Plane Funktion (24) eine Ethernet Verbindung bereitgestellt wird.

11. Verfahren nach einem der vorhergehenden Ansprüche, **dadurch gekennzeichnet, dass**
Regeln für die Nutzungsberichterstattung bei der User-Plane Funktion (24) über eine separate Netzwerkfunktion implementiert werden.

12. Verfahren nach einem der vorhergehenden Ansprüche, **dadurch gekennzeichnet, dass**
eine drahtgebundene Kommunikationsverbindung (22) zwischen dem Endgerät (18) und dem Funkzugangsnetz (20) bereitgestellt wird.

13. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (12) zum Betreiben eines Netzwerks (10) für eine Umgebung, wobei die elektronische Recheneinrichtung (12) zum Durchführen eines Verfahrens nach einem der Ansprüche 1 bis 12 ausgebildet ist.
